# EUROPEAN PATENT APPLICATION

(11) **EP 2 007 068 A2**
(43) Date of publication of application: **24.12.2008**
(21) Application number: 07720327.1
(22) Date of filing: 05.03.2007
(51) Int. Cl.: H04L 12/24, H04L 12/28, H04L 12/46, H04Q 7/36

(54) **THE METHOD OF MANAGING DEVICES IN USER NETWORK AND THE MANAGING ENTITY OF USER NETWORK**

(30) Priority: 06.04.2006 CN 200610025482
(71) Applicant: Huawei Technologies Co., Ltd., Longgang District Shenzhen Guangdong 518219 (CN)
(72) Inventor: ZHANG, Ling, Guangdong 518129 (CN); ZHONG, Yongfeng, Guangdong 518129 (CN); LIU, Ling, Guangdong 518129 (CN)
(74) Representative: Hengelhaupt, Jürgen
(86) International application number: PCT/CN2007/000706
(87) International publication number: WO 2007/115466

(57) **Abstract**

The present invention relates to the communication field and discloses a method for managing devices in a user network and a user network management entity which handles combining and splitting operations in the user network more efficiently. In the technical solution provided by the present invention, the management entity of the user network obtains the information about the location of the managed PANs and/or stand-alone devices, and, based on the location information, checks existence of any PAN and/or stand-alone device that can be combined or split. If any such device exists, the management entity performs the combining or splitting operation according to the combining or splitting mode preset or selected by the user. In the process of combining or splitting a PAN or stand-alone device, the user can reserve the network registration information of some relevant devices as required, update the network registration information of other devices directly, and switch the service access points to ensure continuity of network services.

## Description

This application claims a priority from the Chinese Patent Application No. 200610025482.1, filed with the Chinese Patent Office on April 06, 2006 and entitled "Method for Managing Devices and a Management Entity in a User Network", the contents of which are incorporated herein by reference in their entirety.

### FIELD OF THE INVENTION

This invention relates to the communication technology field, and in particular, to a method for managing devices in a user network and a management entity in a user network.

### BACKGROUND

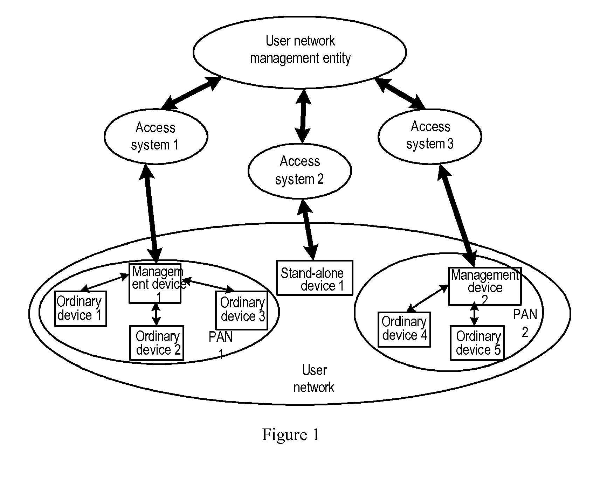

With the development of communication technologies, it is possible for a user to connect all User Equipments (UEs) and even the personal networks of the user by certain means. A user network consists of multiple stand-alone devices of the same user or multiple Personal Area Networks (PANs) composed of devices. Through a user network, the user can perform unified management and maintenance for stand-alone devices or PANs of the user regardless of their location and the access mode. Moreover, communication can be performed between stand-alone devices or PANs in a user network. As shown in Figure 1, a user network not only contains stand-alone devices and PANs, but also contains a network management entity. Here a "stand-alone device" is a device that belongs to no PAN, for example, a mobile phone that belongs to no PAN; a PAN is a network made up of nearby ordinary devices which are connected through wired or wireless connection technologies such as Bluetooth, for example, an office network made up of ordinary devices in an office such as PC, printers and scanners; a network management entity is a logic entity that manages all devices and PANs in a user network, and can be located on a server of an operator (user) and controlled by the user through a management device.

The network management entity manages the stand-alone devices and PANs in the user network. The management operations include: registering, unregistering, activating and deactivating a device; and identifying and authenticating an identity. The registration information of a device includes a network ID, a network address, and a neighbor list. To join a user network, each device needs to be registered; to exit a user network, the device needs to be unregistered. Once registered, a device has a unique identity and a unique location in the user network.

A user network not only contains a network management entity, but also has a device containing an access network identification module in each PAN, and this device serves as a management device. This management device is adapted to coordinate and control communication between other ordinary devices in the PAN, and serves as a unique interface for communication between an ordinary device in the PAN and an outside device or network. The control information and the data information sent from the network management entity to each ordinary device in the PAN need to be conveyed by the management device. A management device contains an access network identification module such as UMTS Subscriber Identity Module (USIM), and can access other networks such as Public Lands Mobile Network (PLMN) to use the services available from the network. Other ordinary devices in the PAN can use such services only through a management device. An access network identification module is generally a detachable physical entity. An ordinary device becomes a management device after an access network identification module is attached to it; a management device becomes an ordinary device after the access network identification module is detached from it. The access network identification module does not work until being activated. After the access network identification module on a management device is deactivated, the management device becomes an ordinary device. In a PAN, it is possible that access network identification modules are installed on multiple devices, but only the access network identification module on the management device is active.

A device can join or exit a PAN; and a PAN can combine with another PAN or break down into several PANs. Such processes lead to change of the network architecture, and hence need change of the registration information of relevant devices.

The device in a user network may be a mobile device or a fixed device. Therefore, a user network must support mobility of devices, so that communication is still normal after each device moves to another location.

In the prior art, in order to combine the PANs into a new PAN in a user network, each PAN to be combined must be split first, and then the devices in each PAN are added into the new PAN; in order to split a PAN in a user network, all devices in the PAN must be unregistered first. Moreover, a user network is unable to identify the relative location of each PAN, so the user has to participate in the whole process of combining the PANs.

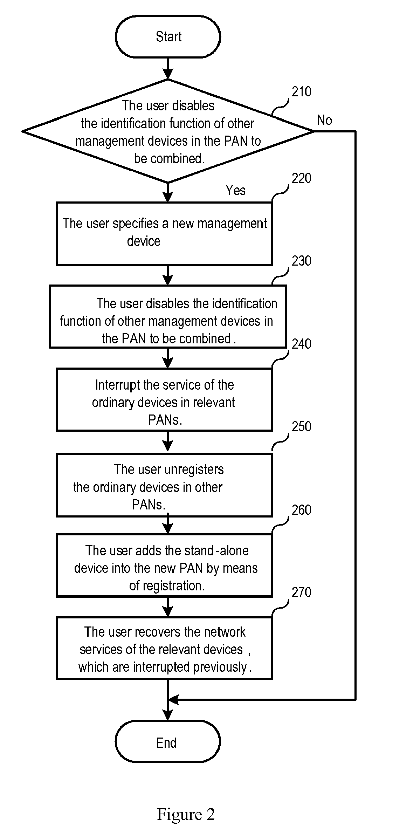

Specifically, as shown in Figure 2, if the user discovers that a PAN coexists with another PAN nearby in the network, the PANs can be combined in the procedure as described hereinafter.

Step 210: The user judges whether such PANs can be combined in view of the factors such as whether they belong to the same type of short-distance wireless communication network. If the PANs can be combined, the procedure goes to step 220; otherwise, the operation is finished.

Step 220: The user specifies a device containing an access network identification module as a management device, and activates the access network identification function of the management device.

Step 230: By deactivating or detaching the access network identification module, the user disables the access network identification function of other management devices in the PANs to be combined.

Step 240: The user interrupts the network service that is used by the ordinary devices in such PANs through the management device.

Step 250: Except the specified management device, the user unregisters the ordinary devices in the PANs involved in the combining process so that they become stand-alone ordinary devices.

Step 260: The user registers the stand-alone ordinary devices into the new PAN, during which the network management entity assigns new network addresses and a new binding table to such devices.

Step 270: The user recovers the network services of the devices interrupted previously.

Just as the method for combining one PAN with another, the method for combining a stand-alone device and a PAN in a user network requires the user to actively discover the PAN and the stand-alone device that need to be combined, and to specify a management device for the new combined PAN. After a management device is specified, the user needs to disable the access network identification function of all management devices except the specified management device, and interrupt the network service being used in the PAN. Afterward, the user needs to unregister the devices in the PAN involved in the combining process and the stand-alone devices except the specified management device, so that the devices become stand-alone ordinary devices; and then the user adds the stand-alone ordinary devices into the new PAN one by one by means of registration. During the registration, the user registers such devices again through a management entity, assigns new network addresses and a new binding table to the devices, and recovers the network services of the devices interrupted previously.

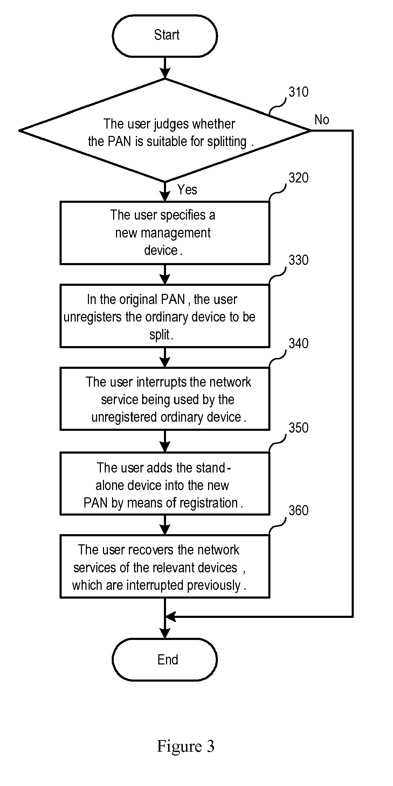

As shown in Figure 3, a PAN in a user network is split in the procedure as described hereinafter.

Step 310: First, the user judges whether the separate ordinary devices can form a stand-alone PAN, that is, checks for existence of any ordinary device that can be changed into a management device (for example, checks for existence of any ordinary device that carries an inactive access network identification module or contains an interface for installing the module). If such an ordinary device exists, the procedure goes to step 320; otherwise, the operation is finished.

Step 320: By activating the access network identification module of the ordinary device or by installing an access network identification module onto the ordinary device and activating it, the user specifies a management device for the new PAN.

Step 330: The user unregisters the ordinary device that needs to be split in the existing PAN so that the ordinary device becomes a stand-alone ordinary device.

Step 340: The user interrupts the network service being used by the unregistered ordinary device.

Step 350: The user adds the unregistered ordinary devices into the new PAN again by means of registration, during which the network management entity assigns new network addresses and a new binding table to such devices.

Step 360: The user recovers the network services of the devices interrupted previously.

Just as the method of splitting one PAN from another in the user network, the method of splitting a PAN from a management device in the PAN requires the user to actively discover the PAN that needs to be split, specify a device among the ordinary devices in the PAN, install an access network identification module for the specified device, activate the module, and specify the device as a management device of the split PAN. After re-registering the device and assigning a new network address and a new binding table to the device, the user recovers the network service of the device interrupted previously.

In the practice, it is rather inconvenient for the user to split/combine a PAN from/with another PAN or split/combine a PAN from/with a stand-alone device in the user network, and the combining and splitting operations consume plenty of network resources and may lead to communication interruption of devices.

The reasons are that the user network is unable to identify each PAN or the relative location of the stand-alone device automatically, and unable to control or manage the combining or splitting process of a PAN, and all operations need to be performed by the user manually, which is rather inconvenient. Moreover, the subjective judgment made by the user is usually inaccurate and unpunctual. Sometimes the ordinary device quits the PAN without being detected by the user in time, and communication is interrupted.

Since the user network provides no mechanism of updating registration information of the PAN, the relevant devices need to be unregistered and then registered again after the PAN that covers the devices is changed. Consequently, the processing delay is increased, and the network resources are consumed by inefficient repetitive operations. To get re-registered, the relevant devices must interrupt all services in the existing PAN first, and then are re-registered and restarted, which leads to low efficiency of the services in the user network.

The user network does not support combining or splitting of PANs, so the relevant services are unavailable from the user network, which restricts the service capabilities of the PAN.

### SUMMARY

The present invention provides a method for managing devices and a management entity in a user network, wherein the management entity knows the location of each management object in the user network, and performs combining and splitting of stand-alone devices and/or PANs in the user network based on the location information, without requiring manual combining/splitting operations of the user.

A method for managing devices in a user network provided in an embodiment of the present invention includes:
obtaining, by a management entity, the current location information of all management objects in the user network; and
judging, according to the obtained current location information, whether the distance between the management objects meet the preset conditions of combining or splitting, and combining or splitting the management object that meets the conditions.
the management object is a stand-alone device and/or a PAN managed by the management entity;
the PAN contains a management device capable of identifying access networks and other ordinary devices; and
the stand-alone device is capable of identifying the access network.
the combining operations include:
   combining PANs, combining stand-alone devices, and combining a stand-alone device with a PAN;
the splitting operations include:
   splitting a PAN into two or more PANs, splitting a PAN into a stand-alone device and a PAN, and splitting a PAN into two or more stand-alone devices.

A user network management entity provided in an embodiment of the present invention includes:
a location obtaining module, adapted to obtain the information about the location of each management object in the user network;
an executing module, adapted to instruct the management object to perform the combining or splitting operation; and
a judging module, adapted to judge whether the distance between the management objects meets the preset conditions of combining or splitting according to the current location information obtained by the location obtaining module, and instruct the management object that meets the conditions to perform the combining or splitting operation through the executing module.

As against the prior art, in the technical solution provided by the present invention, the management entity of the user network obtains the information about the location of the managed PAN and/or stand-alone devices, and, based on the location information, checks for existence of any PAN and/or stand-alone device that can be combined or split. If any such device exists, the management entity performs the combining or splitting operation according to the combining or splitting mode preset or selected by the user. In the technical solution provided by the present invention, the combining or splitting operation is not decided subjectively by the user. Therefore, the communication between PANs and/or stand-alone devices in the user network is maintained more accurately, reliably and efficiently, the workload of the user is relieved, and the user is facilitated.

In the process of combining or splitting a PAN or stand-alone device, the user can reserve the network registration information of some relevant devices as required, and update the network registration information of other devices directly, thus shortening the processing delay, improving the working efficiency of the network management entity and saving the storage space. Moreover, through switching of the service access point, the continuity of the network service is guaranteed.

### BRIEF DESCRIPTION OF THE DRAWINGS

Figure 1 shows the user network in the prior art.

Figure 2 shows the process of combining two PANs in a user network according to the prior art.

Figure 3 shows the process of splitting a PAN in a user network according to the prior art.

Figure 4 shows the process of managing devices in a user network according to the first embodiment of the present invention.

Figure 5 shows the architecture in the method of managing devices in a user network before combining PANs according to the first embodiment of the present invention.

Figure 6 shows the first type of architecture in the method of managing devices in a user network after combining PANs according to the first embodiment of the present invention.

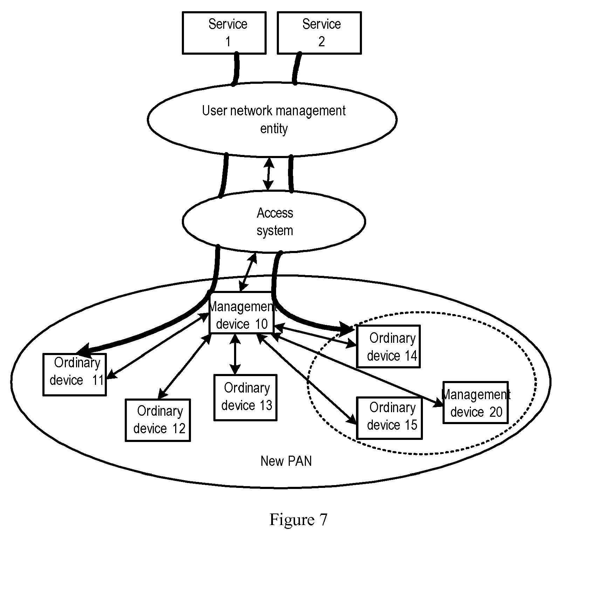

Figure 7 shows the second type of architecture in the method of managing devices in a user network after combining PANs according to the first embodiment of the present invention.

Figure 8 shows the process of managing devices in a user network according to the second embodiment of the present invention.

Figure 9 shows the process of managing devices in a user network according to the third embodiment of the present invention.

Figure 10 shows the architecture in the method of managing devices in a user network before combining the PAN with the stand-alone device according to the third embodiment of the present invention.

Figure 11 shows the first type of architecture in the method of managing devices in a user network after combining a PAN with a stand-alone device according to the third embodiment of the present invention.

Figure 12 shows the second type of architecture in the method of managing devices in a user network after combining a PAN with a stand-alone device according to the third embodiment of the present invention.

Figure 13 shows the process of managing devices in a user network according to the fourth embodiment of the present invention.

Figure 14 shows the process of managing devices in a user network according to the fifth embodiment of the present invention.

Figure 15 shows the system architecture of a user network management entity according to the sixth embodiment of the present invention.

### DETAILED DESCRIPTION

In order to make the technical solution and merits of the present invention clearer, a detailed description of the present invention is hereinafter given with reference to accompanying drawings and preferred embodiments.

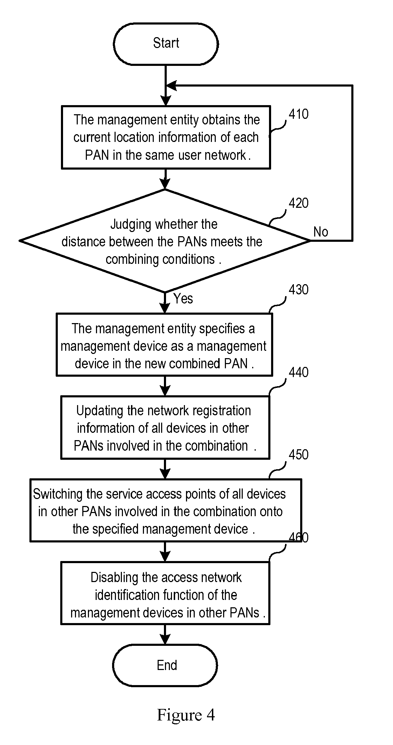

As shown in Figure 4, the process of managing devices in a user network according to the first embodiment of the present invention is described hereinafter.

Step 410: The management entity obtains the information about the current location of each management object in the same user network. The management object includes a stand-alone device and a PAN, both being capable of identifying access networks in the user network; the PAN further includes a management device and other ordinary devices capable of identifying access networks.

Specifically, according to a preset period or as triggered by a preset event or as requested by the user, a management entity can obtain or update the information about the location of each stand-alone device, PAN, and the devices in a PAN; alternatively, the location information may be reported by each stand-alone device or PAN or each device in the PAN automatically; depending on the specific service requirements and service capabilities of the user network, the obtained location information may be an actual location of the device such as actual physical location, or a relative location in the user network such as a relative location using a device in the user network as a reference point, so long as the network management entity can calculate out the distance between the PANs through the location information.

Step 420: The management entity judges whether the PANs are suitable for combining according to the preset conditions, namely, judges whether the distance between the PANs meets the preset conditions of combining.

Specifically, the management entity may calculate out the distance between the PANs according to the obtained location information, and judges whether the distance between the PANs meets the preset conditions of combining, or further judges whether each PAN meets the basic conditions required for network combination, for example, whether they belong to the same type of short-distance wireless communication network; if the distance between two or more PANs meets the preset conditions of combining and such PANs meet the basic conditions of network combination, the procedure goes to step 430 to combine the PANs, or else the procedure goes back to step 410, in which the management entity continues to obtain and update the current location information of each management object in the user network.

The management entity obtains the location information of the management object automatically, and accurately determines whether the distance between the management devices meets the preset conditions of combining. Therefore, the combining or splitting operation is no longer decided by subjectively by the user; the communication between PANs in the user network is maintained more reliably and efficiently; the workload of the user is relieved, and the user is facilitated.

Step 430: The management entity specifies a management device as a management device in the new combined PAN; specifically, the distance between two or more PANs meets the preset conditions of combining, so the management entity can combine them into a new PAN. The management entity specifies a management device as a management device in the new combined PAN; if the user network presets the mode of combining the PANs, the management entity can specify a management device as a management device in the new combined PAN among the PANs involved in the combining in the preset mode; conversely, if the user network never presets the mode of combining PAN, the management device asks for advice of the user first, for example, the management device can provide the user with the name and the attributes of the PANs to be combined and the reasons for combining so that the user knows the state of the PANs and the service being used by the PANs. After receiving feedback from the user, the management device specifies the corresponding management device as a management device in the new combined PAN according to the feedback.

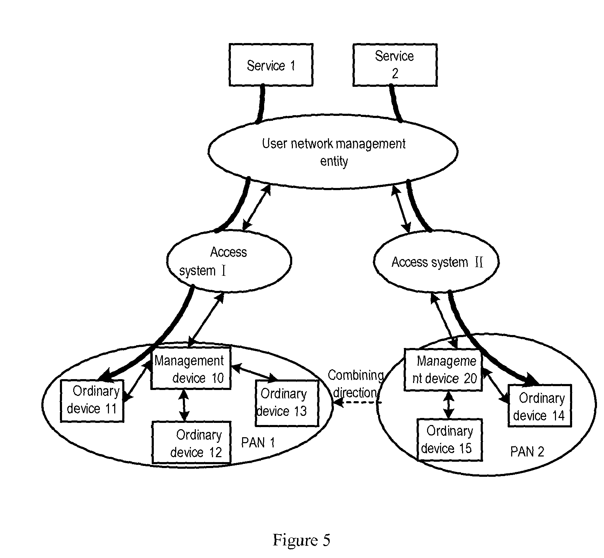

As shown in Figure 5, in the previous steps, the management entity judges whether the distance between PAN1 and PAN2 meets the preset conditions of combining according to the location of each PAN in the user network. In step 430, the management device can specify a management device 10 in the PAN1 as a management device in the new PAN according to the preset combining mode.

Step 440: The management entity updates the network registration information of the specified management device, and updates the network registration information of the devices in the PANs involved in the combination, except the PAN previously containing the specified management device. The network registration information includes at least one item of: device identity, network address and neighbor list.

Specific to the previous case, the management entity updates the network registration information of the management device 10 in PAN1, and updates the network registration information of the devices in PAN2.

In the process of combining, the management entity reserves the network registration information of some devices in the PAN previously containing the specified management device, thus shortening the processing delay, improving the working efficiency of the network management entity and saving the storage space.

Step 450: The management entity switches the service access points of all devices in other PANs involved in the combination to the specified management device, so that all devices combined into the new PAN access the service network through the specified management device directly or indirectly.

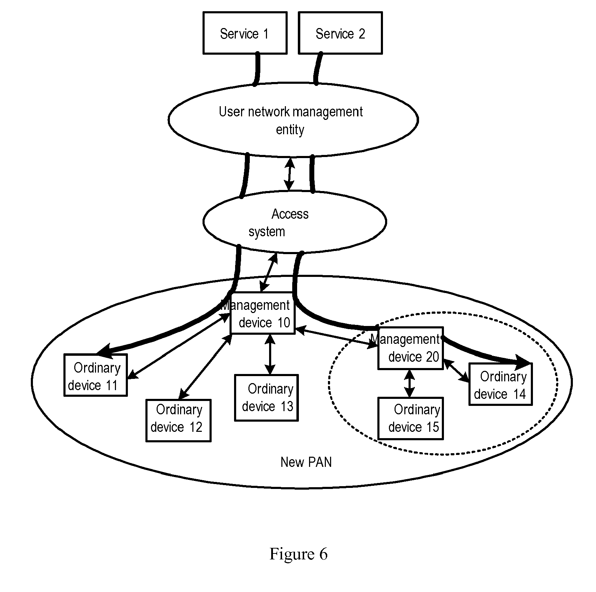

Specific to the previous case, the management entity switches the access point of the management device 20 in PAN2 onto the management device of the new PAN, namely, management device 10. As shown in Figure 6, in the original PAN2, the ordinary devices 14 and 15 connected with the management device 20 do not access the service network through the management device 20 any longer, but access the service network indirectly through the management device 1; or the management entity connects the management device 20 and the ordinary devices 14 and 15 in PAN2 onto the management device 10, so that they access the service network through the management device 10 directly; in this process, the ordinary device 14 is using network service 2, so the management entity needs to perform service redirection regardless of the method applied. In the process of combining, it is necessary to switch the service access points of all devices in other PANs involved in the combination, and perform timely redirection for the services in use. Therefore, the management entity does not need to interrupt the service in use in the process of combining the PAN, thus ensuring continuity of network services.

Step 460: The management entity disables the access network identification function of the management device in other PANs involved in the combination, so that all devices in the new PAN can access the service network only through the specified management device, and finally finish combining the PANs.

Specific to the previous cases, the management entity disables the access network identification function of the management device 20 in PAN2, and changes the management device into an ordinary device so that all devices in the new PAN can access the service network only through management device 10.

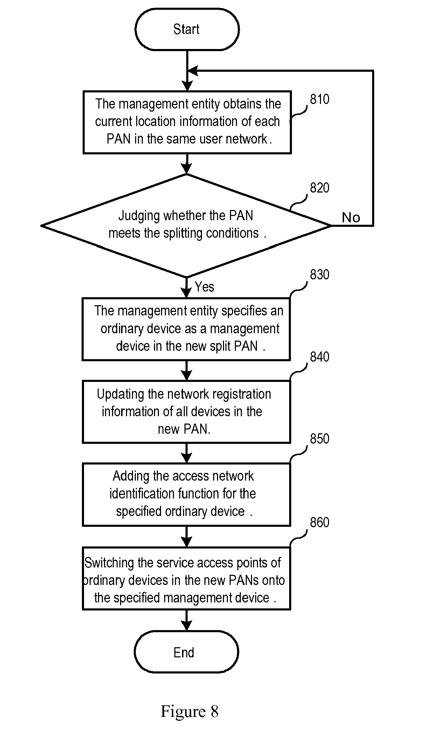

As shown in Figure 8, in the second embodiment of the present invention, the method for managing devices in a user network includes the steps as described hereinafter.

Step 810: similar to step 410.

Step 820: The management entity judges whether each PAN is suitable for splitting according to the preset conditions, namely, judges whether the distance between an ordinary device and other devices in each PAN meets the preset conditions of splitting.

Specifically, the management entity calculates out the distance between an ordinary device and the management device in each PAN according to the obtained location information, and judges whether the distance between the ordinary device and the management device in the PAN meets the preset conditions of splitting, or further judges whether the ordinary device far away from the management device in the PAN can be split out to form a new PAN, for example, checks existence of at least one ordinary device that can be changed into a management device among all ordinary devices far away from the management device; if the PAN meets the preset conditions of splitting, and the ordinary devices that need to be split out include the ordinary devices that can be changed to management devices, the procedure goes to step 830; otherwise, the procedure goes back to step 810, in which the management entity continues to obtain and update the current location information of each management object in the user network periodically or conditionally.

Step 830: Among the ordinary devices that meet the splitting conditions, the management entity specifies an ordinary device as a management device in the new PAN generated after splitting. The specified ordinary device meet the basic conditions of changing into a management device, including the support of adding the access network identification function; if the user network presets a mode of splitting the PAN, the management entity specifies an ordinary device as a management device in the new PAN generated after splitting according to the presetting; if the user network does not preset a mode of splitting the PAN, the management entity asks for advice of the user, for example, the management entity can provide the user with the name and attributes of the PAN to be split and the reasons of splitting. After receiving feedback from the user, the management device specifies the corresponding ordinary device as a management device in the new PAN generated after splitting according to the feedback.

Step 840: The management entity updates the network registration information of all devices in the new PAN. The network registration information includes a device identity, a network address, and a neighbor list.

Step 850: The management entity adds the access network identification function to the specified ordinary device so that the ordinary device has the functions required as a management device and becomes a management device.

Step 860: The management device switches the service access point of the ordinary device in the new PAN to the specified management device, so that all devices in the new PAN access the service network through a specified management device. If the ordinary device involved in the switching is using a network service in the switching process, the management entity further performs service redirection to ensure continuity of the network service.

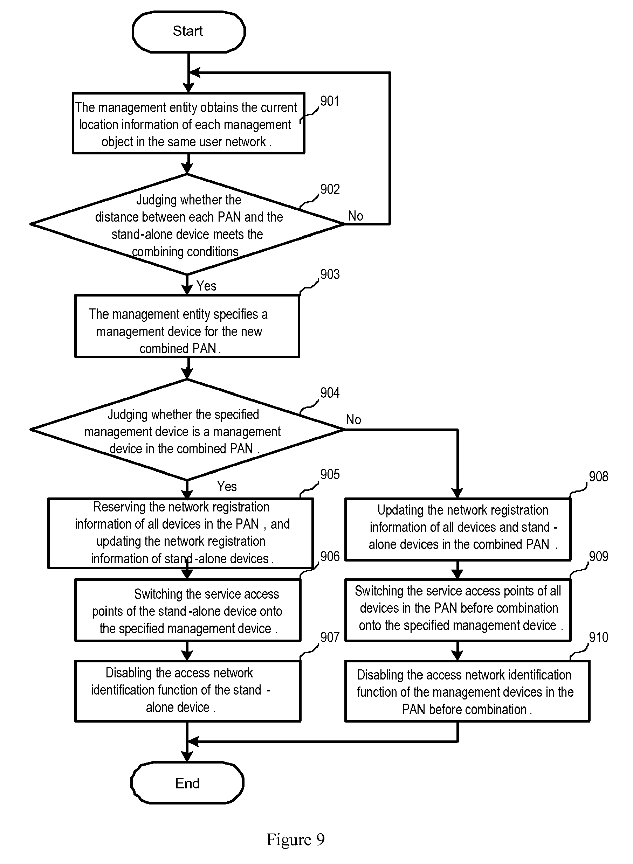

As shown in Figure 9, the process of managing devices in a user network according to the third embodiment of the present invention is described hereinafter.

Step 901: similar to step 410.

Step 902: According to the obtained location information, the management entity judges whether the distance between the managed PAN and the stand-alone device meets the combining conditions; if the conditions are met, the procedure goes to step 903; otherwise, the procedure goes back to step 901 in which the management entity continues to obtain and update the current location information of each management object in the user network periodically or conditionally.

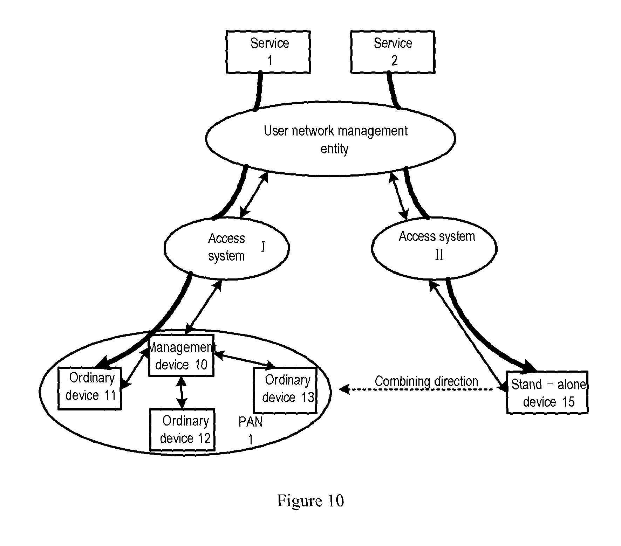

Step 903: According to the preset combining scheme or as required by the user, the management device specifies a management device for the new combined PAN. A management device has the access network identification function, so the specified management device is generally a management device in the combined PAN or a stand-alone device involved in the combination. As shown in Figure 10, the distance between the PAN and the stand-alone device 15 meets the combining conditions, so the management entity combines them into a new PAN. In step 903, the management entity specifies a management device for the new PAN generated after combination. The specified management device may be management device 10 or stand-alone device 15.

Step 904: The management entity judges whether the specified management entity is a management device in the combined PAN. If so, the procedure goes to step 905; or else step 908. Specific to the previous case, the management entity judges whether the specified device is management device 1 in the combined PAN1. If so, the procedure goes to step 905; or else step 908.

Step 905: If the specified management device is a management device in the combined PAN, the management entity updates the network registration information of the management devices in the combined PAN, and updates the network registration information of the combined stand-alone devices, in which the network registration information includes device identity, network address and neighbor list.

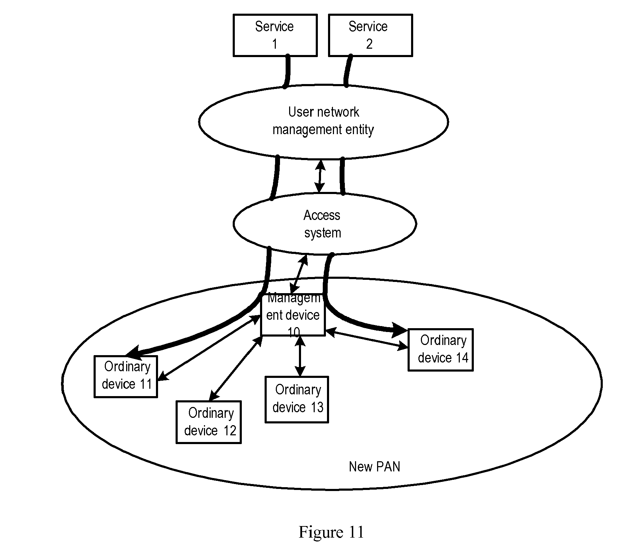

Step 906: The management device switches the service access point of the stand-alone device to the specified management device, so that the stand-alone device accesses the service network through the specified management device. If the stand-alone device is using a network service in the combining process, the management entity further performs service redirection. Specific to the previous case, as shown in Figure 11, the management entity switches the service access point of the stand-alone device 15 to the specified management device 10, so that the stand-alone device 15 can access the service network through the management device 10.

Step 907: By disabling the access network identification function of the stand-alone device, the management entity changes the stand-alone device 15 into an ordinary device, and the combining process is finished. Specific to the previous case, the management entity disables the access network identification function of the stand-alone device 15 so that the stand-alone device becomes an ordinary device.

In step 904, if the management entity determines that the specified management device is a combined stand-alone device, the procedure goes to step 908, and the management entity updates the network registration information of all devices and stand-alone devices in the combined PAN.

Step 909: The management entity switches the service access points of all devices in the PAN before combination onto the specified management device, so that all devices in the PAN before combination access the service network directly or indirectly through the specified management device. If the device in the PAN involved in the combination is using a network service in the combining process, the management entity further performs service redirection.

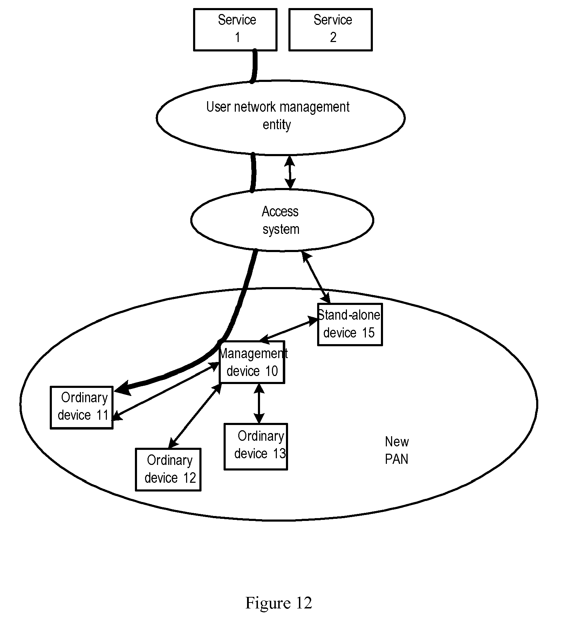

Namely, if the management entity specifies the stand-alone device 15 as a management device 10 in the combined PAN, the management entity can change the service access points of all devices in the PAN indirectly by changing the service access point of the management device 10, so that all devices in the PAN access the service network indirectly through the stand-alone device 15, as shown in Figure 12; alternatively, the management entity can switch the service access points of all devices in the PAN onto the stand-alone device 15 respectively, so that all devices in the PAN access the service network directly through the stand-alone device 15.

Step 910: By disabling the access network identification function of the management device in the PAN before combination, the management entity changes the management device into an ordinary device. Specific to the previous case, the management entity disables the access network identification function of the management device 10 in the PAN and changes it into an ordinary device.

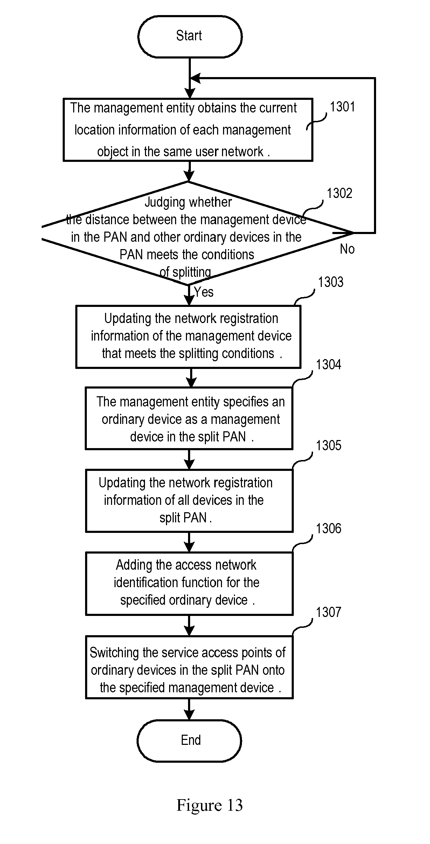

As shown in Figure 13, in the fourth embodiment of the present invention, the method for managing devices in a user network includes the steps as described hereinafter.

Step 1301: similar to step 410.

Step 1302: According to the obtained location information, the management entity judges whether the distance between the management device in the managed PAN and other ordinary devices meets the splitting conditions; if the splitting conditions are met, the procedure goes to step 1303; otherwise, the procedure goes back to step 1301 in which the management entity continues to obtain and update the current location information of each management object in the user network periodically or conditionally.

Step 1303: The management entity updates the network registration information of the management device that meets the splitting conditions, so that the management device becomes a stand-alone device. The network registration information includes a device identity, a network address, and a neighbor list.

Step 1304: The management entity specifies a management device for the split PAN. Specifically, the management entity specifies an ordinary device as a management device in the split PAN among the ordinary devices in the original PAN. This device meets the conditions of being changed into a management device, including support of adding the access network identification function.

Step 1305: The management entity updates the network registration information of all devices in the split PAN. The network registration information includes a device identity, a network address, and a neighbor list.

Step 1306: The management entity adds the access network identification function to the specified ordinary device so that the ordinary device is changed to a management device.

Step 1307: The management entity switches the service access point of the ordinary device in the split PAN onto the specified management device, so that all ordinary devices in the split PAN access the service network through a specified management device. If the ordinary device involved in the switching is using a network service in the switching process, the management entity further performs service redirection to ensure continuity of the network service.

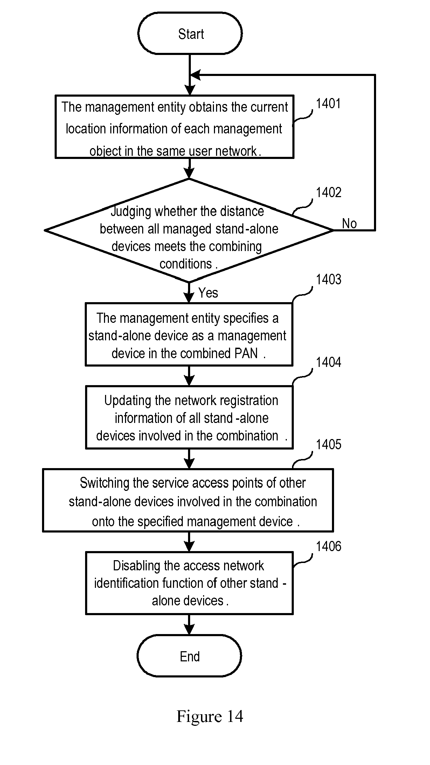

As shown in Figure 14, in the fifth embodiment of the present invention, the method for managing devices in a user network includes the steps as described hereinafter.

Step 1401: similar to step 410.

Step 1402: According to the obtained location information, the management entity judges whether the distance between the managed stand-alone devices meets the combining conditions; if the combining conditions are met, the procedure goes to step 1403; otherwise, the procedure goes back to step 1401 in which the management entity continues to obtain and update the current location information of each management object in the user network periodically or conditionally.

Step 1403: The management entity specifies a combined stand-alone device as a management device in the new combined PAN.

Step 1404: The management entity updates the network registration information of all combined stand-alone devices. The network registration information includes a device identity, a network address, and a neighbor list.

Step 1405: The management device switches the service access points of other stand-alone devices involved in the combination onto the specified management device, so that the combined stand-alone devices can access the service network through the specified management device. If the stand-alone device involved in the combination is using a network service in the combining process, the management entity further performs service redirection to ensure continuity of the network service.

Step 1406: The management entity disables the access network identification function of other stand-alone devices.

In the embodiments of the present invention, the method for managing devices in a user network is described hereinafter.

Step 1601: similar to step 410.

Step 1602: The management entity judges whether the distance between an ordinary device and the management device in each PAN meets the preset conditions of splitting.

Specifically, the management entity calculates out the distance between an ordinary device and the management device in each PAN according to the obtained location information, and judges whether the distance between the ordinary device and the management device in the PAN meets the preset conditions of splitting, and further judges whether the ordinary device far away from the management device in the PAN can be changed to a stand-alone device. If the PAN meets the preset splitting conditions and the ordinary device that needs to be split out can be changed into a stand-alone device, the procedure goes to step 1603; otherwise, the procedure goes back to step 1601, in which the management entity continues to obtain and update the current location information of each management object in the user network periodically or conditionally.

Step 1603: The management entity updates the network registration information of the management device in the original PAN. The network registration information includes a device identity, a network address, and a neighbor list.

Step 1604: The management entity adds the access network identification function to the split ordinary device, and updates the network registration information of the device so that the ordinary device becomes a stand-alone device.

It should be understood that the sequence of step 1603 and step 1604 is uncertain; step 1604 may occur before step 1603 or concur with 1603.

In the embodiments of the present invention, another method for managing devices in a user network is described hereinafter.

Step 1701: similar to step 1601.

Step 1702: The management entity judges whether the distance between the devices in the PAN meets the preset conditions of splitting.

Specifically, the management entity calculates out the distance between all devices according to the obtained location information, judges whether the distance between the devices in the PAN meets the preset conditions of splitting, and further judges whether the device to be split can be changed to a stand-alone device. If the PAN meets the preset splitting conditions and the device that needs to be split out can be changed into a stand-alone device, the procedure goes to step 1703; otherwise, the procedure goes back to step 1701, in which the management entity continues to obtain and update the current location information of each management object in the user network periodically or conditionally.

Step 1703: The management entity updates the network registration information of all devices in the original PAN. The network registration information includes a device identity, a network address, and a neighbor list.

Step 1704: The management entity adds the access network identification function to the split devices so that the devices become stand-alone devices.

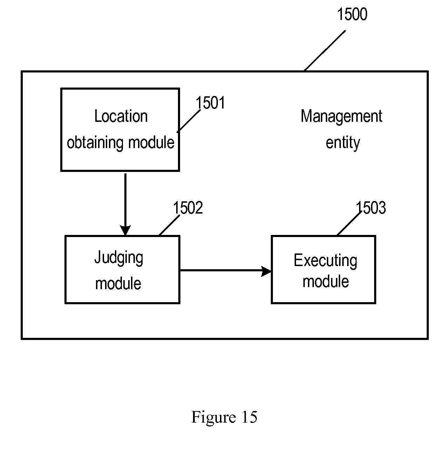

As shown in Figure 15, in the sixth embodiment of the present invention, the user network management entity 1500 contains (i) a location obtaining module 1501 adapted to obtain the information about the location of each management object in the user network; (ii) a judging module 1502, adapted to judge whether the management object meets the preset conditions of combining or splitting; and (iii) an executing module 1503, adapted to instruct the management object to execute the combining or splitting operation according to the judgment results of the judging module.

Specifically, according to a preset period or as triggered by a preset event or as requested by the user, a management entity 1500 can obtain the location information such as distance between management objects in a user network through a location obtaining module 1501; afterward, the judging module 1502 judges whether the distance between the management objects meets the preset conditions of combining or splitting according to the current location information of the management objects obtained by the location obtaining module 1501. If the conditions are met, the management entity instructs the management object that meets the conditions to perform the corresponding combining or splitting operation through the executing module 1503. Management objects include stand-alone devices and PANs in the same user network; and a PAN may be a management device with the access network identification function or other ordinary device.

Although the invention has been described through some preferred embodiments and accompanying drawings, the invention is not limited to such embodiments. It is apparent that those skilled in the art can make various modifications and variations to the invention without departing from the spirit and scope of the invention.

## Claims

1. A method for managing devices in a user network, comprising:
obtaining, by a management entity, current location information of each management object in the user network;
judging whether the management objects meet the preset conditions of combining or splitting according to the obtained current location information; and
combining or splitting the management objects that meet the conditions.

2. The method according to claim 1, wherein:
the management object is a stand-alone device and/or a PAN managed by the management entity;
the PAN contains a management device capable of identifying access networks and other ordinary devices; and
the stand-alone device is capable of identifying access networks.

3. The method according to claim 2, wherein the combining operation is any of:
combining PANs, combining stand-alone devices, or combining a stand-alone device with a PAN.

4. The method according to claim 3, wherein the operation of combining PANs comprises:
specifying, by a management entity, a device as a management device for the combined PAN among the PANs involved in the combination;
updating network registration information of the specified management device;
updating network registration information of the devices in the PANs involved in the combination, except the devices in the PAN previously containing the specified management device;
switching the service access points of the devices in the PANs involved in the combination, except the devices in the PAN previously containing the specified management device, onto the specified management device; and
disabling the access network identification function of the management devices in the PANs involved in the combination, except the management devices in the PAN previously containing the specified management device.

5. The method according to claim 3, wherein the operation of combining a stand-alone device with a PAN comprises:
specifying, by a management entity, a management device of a combined PAN;
updating, by the management entity, the network registration information of the specified management device and the combined stand-alone device if the specified management device is a device in the PAN being combined; switching the service access point of the stand-alone device being combined onto the specified management device; and disabling the access network identification function of the stand-alone device; and
updating, by the management entity, the network registration information of all devices in the PAN being combined and the stand-alone devices if the specified management device is the stand-alone device being combined; switching the service access points of all devices in the PAN being combined onto the specified management device; and disabling the access network identification function of the management device in the PAN being combined.

6. The method according to claim 3, wherein the operation of combining stand-alone devices comprises:
specifying, by a management entity, a stand-alone device being combined as a management device for the combined PAN; and updating the network registration information of the stand-alone devices; and
switching the service access points of the stand-alone devices involved in the combination, except the service access points of the specified stand-alone device, onto the specified management device; and disabling the access network identification function of the stand-alone devices involved in the combination, except the access network identification function of the specified stand-alone device.

7. The method according to claim 2, wherein the splitting operation is: splitting a PAN into two or more PANs, splitting a PAN into a stand-alone device and a PAN, or splitting a PAN into multiple stand-alone devices.

8. The method according to claim 7, wherein the process of splitting a PAN into two or more PANs comprises:
specifying, by a management entity, a management device for the split PANs;
updating the network registration information of the devices in the split PANs; and
switching the service access points of the ordinary devices in the split PAN onto the specified management device.

9. The method according to claim 7, wherein the process of splitting a PAN into a stand-alone device and a PAN comprises:
updating, by the management entity, the network registration information of the management device if the management device previously contained in the PAN is split into a stand-alone device; specifying a management device for the split PAN; updating the network registration information of the devices in the split PAN; and switching the service access points of ordinary devices in the split PAN onto the specified management device.

10. The method according to claim 7, wherein the process of splitting a PAN into a stand-alone device and a PAN comprises:
updating, by the management entity, the network registration information of the management device and the split stand-alone device if the ordinary devices previously contained in the PAN is split into stand-alone devices.

11. The method according to claim 7, wherein the process of splitting a PAN into multiple stand-alone devices comprises:
updating the network registration information of the split stand-alone devices.

12. The method according to any of claims 4, 5, 6, 8, 9, 10, 11, wherein the network registration information includes one or more of a device identity, a network address, and a neighbor list.

13. The method according to any of claims 1 to 11, wherein the management entity obtains the location information of the management object in a preset period, as triggered by an event, or as originated by the user.

14. A user network management entity, comprising:
a location obtaining module, adapted to obtain location information of each management object in the user network;
a judging module, adapted to judge whether the management objects meet the preset conditions of combining or splitting according to the current location information obtained by the location obtaining module; and
an executing module, adapted to instruct the management object to execute the combining or splitting operation; and instruct the management object that meets the conditions to execute the combining or splitting operation according to the judgment result of the judging module.

15. The user network management entity according to claim 14, wherein:
the management object is a stand-alone device and/or a PAN managed by the management entity;
the PAN contains a management device capable of identifying access networks and ordinary devices; and
the stand-alone device is capable of identifying access networks.
